# EUROPÄISCHE PATENTANMELDUNG

(11) **EP 2 602 420 A2**
(43) Veröffentlichungstag der Anmeldung: **12.06.2013**
(21) Anmeldenummer: 12196201.3
(22) Anmeldetag: 07.12.2012
(51) Int. Cl.: E06B 7/28

(54) **Klemmträger und Fenster mit dem Klemmträger**

(30) Priorität: 07.12.2011 DE 202011108757 U
(71) Anmelder: Iversen, Hans, 8920 Randers NV (DK)
(72) Erfinder: Iversen, Hans, 8920 Randers NV (DK)
(74) Vertreter: Müller Schupfner & Partner

(57) **Zusammenfassung**

Gegenstand der Erfindung ist ein Klemmträger (1) zum Aufhängen von Zubehör, wie beispielsweise Sonnen- oder Blickschutzeinrichtungen oder dergleichen an Holmen (10) von Fenstern und Türen und ein Fenster mit dem Klemmträger (1) zur Halterung einer Fensterabdeckung. Der Klemmträger (1) weist gegeneinander verschiebbar geführte Klemmwangen (2, 3) auf, wobei eine Klemmwange (2) wenigstens einen Durchbruch (7) mit Ratschzähnen (12) und die andere Klemmwange (3) zumindest zwei unter Spannung auf Abstand geführte Leisten (6) mit zumindest einer Zahnleiste (13) aufweist, wobei die Leisten (6) in den Durchbruch (7) verrastbar eingeführt werden können.

## Beschreibung

Die Erfindung bezieht sich auf einen Klemmträger zum Aufhängen von Zubehör, wie beispielsweise Sonnen- oder Blickschutzeinrichtungen oder dergleichen an Holmen von Fenstern und Türen und ein Fenster mit dem Klemmträger zur Halterung einer Fensterabdeckung.

Aus der EP1520955 B1 ist ein Klemmhalter für Sonnen- oder Blickschutzeinrichtungen an Holmen von Fenstern, Türen oder Ähnlichem bekannt, der zwei mittels einer Gewindestange gegeneinander verschiebliche Klemmflansche aufweist.

Es ist Aufgabe der Erfindung, eine Klemmhalterung zum Aufhängen von Zubehör, wie beispielsweise Sonnen- oder Blickschutzeinrichtungen oder dergleichen an Holmen von beispielsweise Fenstern und Türen zu schaffen, die ohne Werkzeug einfach und schnell montierbar ist.

Die gestellte Aufgabe ist erfindungsgemäß durch den Gegenstand des Anspruches 1 gelöst. Vorteilhafte Ausgestaltungen sind Gegenstand der Unteransprüche oder nachfolgend beschrieben.

Wenn eine der Klemmwangen zumindest einen Durchbruch mit zumindest einem Ratschzahn, vorzugsweise mit mehreren Ratschzähnen, z.B. einen oder mehrere Ratschzähne auf gegenüberliegenden Seiten des Durchbruchs, und die andere zwei in einem oder mehreren Durchbrüchen verschiebbare Leisten aufweist, wobei mindestens eine Leiste Zähne entlang einer Zahnleiste aufweist, dann ist es möglich, dass der Ratschzahn und Zähne der Leiste mit der Zahnleiste beim Montieren einfach ratschend zusammengeschoben werden, bis die Klemmwangen, einen Holm übergreifend, ineinander verrasten, indem der/die Ratschzahn/Ratschzähne in eine passende Zahnlücke der Leiste eingefallen ist/sind. Der Klemmträger ist so am Holm festgelegt. Das ist eine einfache und wirksame Schnellklemmkonstruktion.

Bei mehreren Ratschzähnen an der jeweiligen Durchbrechungsfläche und/oder mehreren Leisten mit jeweils einer Zahnleiste erhöht sich die Rastkraft des Rasteffektes.

Nach einer weiteren bevorzugten Ausgestaltung der Erfindung ist vorgesehen, dass der Durchbruch der einen Klemmwange an gegenüber befindlichen Wänden zumindest einen Ratschzahn, vorzugsweise mehrere Ratschzähne, aufweist und dass die andere Klemmwange mit zwei auf Abstand geführten Leisten mit jeweils einer Zahnleiste in dem Durchbruch so verschiebbar ist, dass die Ratschzähne am Durchbruch in die passenden Zahnlücken der Zahnleisten eingefallen sind, sobald die Klemmwangen den Holm zwischen sich einklemmen.

Nach einer weiteren bevorzugten Ausgestaltung der Erfindung ist vorgesehen, dass die Zähne der Zahnleisten an divergierenden Seiten (links und rechts) der beiden Leisten vorgesehen sind und mit den Ratschzähnen des Durchbruches zusammenwirken.

Nach einer weiteren Ausgestaltung der Erfindung ist vorgesehen, dass die Zahnleisten in divergierenden Richtungen auf die Wände des Durchbruches auseinander federnd ausgebildet sind.

Nach einer weiteren bevorzugten Ausgestaltung der Erfindung ist vorgesehen, dass die eine Klemmwange mit einer Montageplatte für Zubehör und die andere Klemmwange mit einer Andruckplatte versehen ist, wobei Montageplatte und Andruckplatte montiert gegen unterschiedliche Holmseiten drücken.

Nach einer weiteren Ausgestaltung der Erfindung ist vorgesehen, dass der Winkel zwischen der Andruckplatte und den Leisten auf kleiner als 90°, vorzugsweise auf kleiner als 88° bis 80°, z.B. etwa 85° bemessen ist. Damit lässt sich eine Spannung zwischen der Andruckplatte und der/den Leisten herstellen, die die Andruckkraft erhöhen kann, z.B. weil sich die Andruckkraft gleichmäßiger auf die Auflagefläche der Andruckplatte verteilt.

Nach einer weiteren Ausgestaltung der Erfindung ist vorgesehen, dass der Winkel zwischen der Montageplatte und den Leisten auf kleiner als 90°, vorzugsweise auf kleiner als 90° bis 80°, z.B. etwa 85° bemessen ist. Damit lässt sich eine Spannung zwischen der Montageplatte und der/den Leisten herstellen, die die Andruckkraft erhöhen kann, z.B. weil sich die Andruckkraft gleichmäßiger auf die Auflagefläche der Andruckplatte verteilt.

Nach einer weiteren Ausgestaltung der Erfindung ist vorgesehen, dass die Klemmwange mit Montageplatte mit zumindest einer Nase versehen ist, die sich auf die Holmoberseite auflegt und sich auf dieser abstützt. Das Gewicht des angehängten Zubehörs wird damit von der Holmoberseite aufgenommen.

Nach einer weiteren Ausgestaltung der Erfindung ist vorgesehen, dass die beiden Leisten nicht exakt parallel gegeneinander versetzt angeordnet sind, sondern etwas versetzt um einen Winkel von z.B. +5 bis +20° aus der parallelen Anordnung nach außen verschoben in Richtung auf die Andruckplatte aufeinander zulaufen, so dass eine Spannung beim Einführen in den Durchbruch geschaffen wird, und sich die Zahnleisten gegen gegenüberliegende Wände des Durchbruchs anpressen. Diese Spannung wird kleiner je weiter die Montageplatte auf die Andruckplatte hin eingeschoben wird.

Vorteilhafterweise sind die Leisten, wenn durch die Durchbrechung(en) geführt federnd an den durch die Durchbrechung(en) geführten Enden von den Ratschzähnen weg mit der Hand gegen eine Eigenspannung zusammen- oder auseinderdrückbar um nach dem Loslassen mit Ihrer/Ihren Zahnleisten in die bzw. einen Ratschzahn einzufallen. Vorzugsweise sind zwei Leisten mit jeweils einer Zahnleiste gegeben, wobei den Zahnleisten jeweils ein Ratschzahn oder eine Reihe von Ratschzähnen zugeordnet ist.

Ein Zusammendrücken erfolgt z.B. wenn die Zahnleisten an zwei gegenüberliegend Leisten voneinander weg zeigend angeordnet sind. Dann fallen Sie in gegenüberliegende Ratschzähne, die aufeinander zu zeigen und auf den Innenflächen einer oder zweier Durchbrechungen angeordnet sind, ein. Die Leisten sind in der einen oder den zwei Durchbrechungen mit Spiel geführt, um zusammendrückbar zu sein.

Nach dieser Ausgestaltung kann weiter vorgesehen sein, dass die Leisten montiert mittels eines Spreizkeiles in der Raststellung auseinander drückbar sind. Auf diese einfache Weise kann eine zusätzliche Sicherung herbeigeführt werden.

Umgekehrt erfolgt ein Auseinanderdrücken z.B. dann, wenn die Zahnleisten an zwei Leisten gegenüberliegend und zueinander zeigend angeordnet sind. Dann fallen Sie in gegenüberliegende Ratschzähne, die voneinander weg zeigen und auf den Innenflächen zweier unterschiedlicher Durchbrechungen angeordnet sind, ein.

Die Leisten sind in den zwei Durchbrechungen mit Spiel geführt, um zusammendrückbar zu sein. Nach einer weiteren Variation obiger Ausgestaltung ist vorgesehen, dass die Leisten montiert mittels einer Klammer in der Raststellung zusammendrückbar sind. Auf diese einfache Weise kann eine zusätzliche Sicherung herbeigeführt werden.

Nach einer weiteren Ausgestaltung der Erfindung ist vorgesehen, dass die Montageplatte mit einem Aufhänghaken versehen ist.

Nach einer weiteren Ausgestaltung der Erfindung ist vorgesehen, dass die Montageplatte mit Montageschlitzen zum Anbringen von Zubehör versehen ist.

Nach einer weiteren Ausgestaltung der Erfindung ist vorgesehen, dass in die Montageplatte eine Halterung aufklippbar oder einschiebbar ist, so dass mit unterschiedlichen Halterungen aber gleichen Klemmwangen unterschiedliche Halteaufgaben gelöst werden können.

Die Erfindung wird anhand der Zeichnung näher erläutert. Es zeigen:
Fig. 1 schaubildlich einen Klemmträger mit zwei Leisten mit jeweils einer Zahnleiste in Explosionsansicht,
Fig. 2 schaubildlich den Klemmträger ein wenig zusammengesteckt über einem Holm eines Fensters oder einer Tür,
Fig. 3 schaubildlich den Klemmträger nach Fig. 1 und 2 mit Pfeilen, die das Zusammendrücken der auf Abstand etwa parallel geführten Leisten für das erleichterte Ineinanderstecken und Auseinandernehmen zeigen,
Fig. 4 schaubildlich den Klemmträger, wie er auf dem Holm festsitzt, wobei eine der Klemmwangen als Montageplatte mit einem Aufhänger versehen ist,
Fig. 4a einen Ausschnitt aus der schaubildlichen Darstellung nach Fig. 4 mit einer vergrößerten Darstellung einer der durch den Durchbruch der Klemmwange hindurch gesteckten Leisten mit Zahnleiste,
Fig. 5 schaubildlich den Klemmträger, wie er auf dem Holm festsitzt, wobei eine der Klemmwangen als Montageplatte mit Montageschlitzen versehen ist.

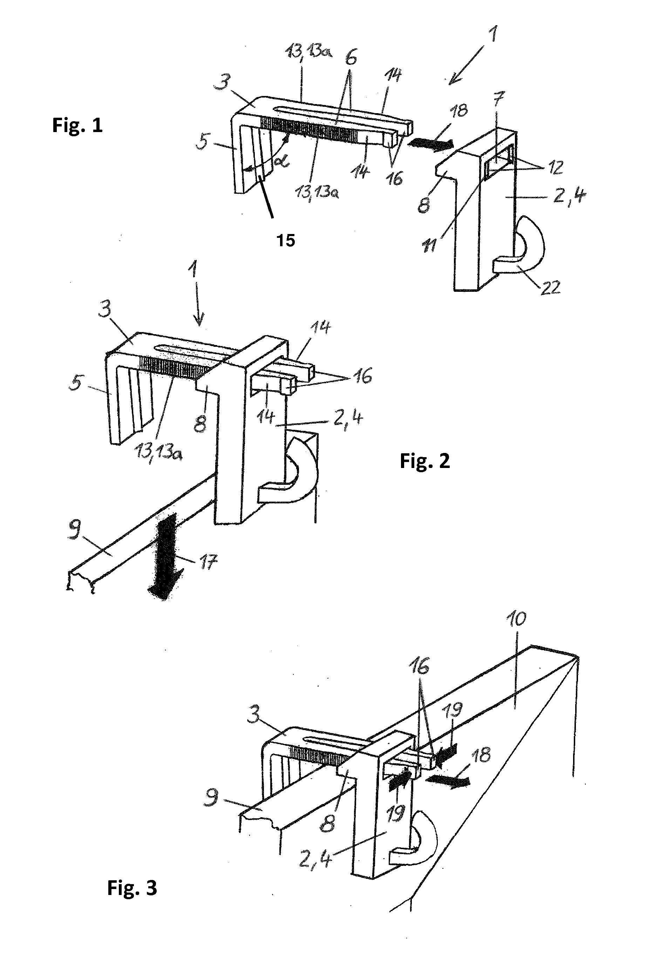

In Fig.1 ist ein Klemmträger 1 nach der Erfindung in Explosionsansicht schaubildlich dargestellt. Der Klemmträger 1 besteht aus zwei Teilen, die beide als Klemmwangen 2, 3 wirksam sind. Die eine Klemmwange 2 weist die Montageplatte 4, die andere Klemmwange 3 die Andruckplatte 5 auf, an die mit Abstand voneinander zwei etwa parallele Leisten 6 angesetzt sind. Die Montageplatte 4 hat einen Durchbruch 7, in dem die Leisten 6 mit Spiel verschiebbar sind. Die Klemmwange 3 weist am oberen Ende der Montageplatte 4 eine Nase 8 auf, mit der sie auf die Oberseite 9 des Holmes 10 eines Fensters oder einer Tür (Fig. 2 bis 5) aufsetzbar ist. Nasenauflagefläche und Andruckfläche der Klemmwange 2 bilden etwa einen rechten Winkel. Der Durchbruch 7 hat an gegenüber befindlichen Wänden 11 jeweils einen Ratschzahn 12.

Die Leisten 6 an der Klemmwange 3 haben an den voneinander abgewandten Seiten 14 Zahnleisten 13 mit zwischen den Zähnen angeordneten Zahnlücken 13a. Die Seiten 14 mit den Zahnleisten 13 und Zahnlücken 13a sind divergierende Seiten 14 der Leisten 6. Diese divergierenden, also nach außen liegenden Seiten 14 sind dabei im Durchbruch 7 den Wänden 11 mit den Ratschzähnen 12 zugewandt. Damit können die Zahnleisten 13 der Leisten 6 mit den Ratschzähnen 12 des Durchbruches 7 ratschend zusammenwirken. Die Andruckplatte 5 ist mit einer vorstehenden Rippe 15 versehen. Diese greift in die Gummidichtung (nicht gezeigt) an der Holminnenseite ein.

Fig. 2 zeigt den Klemmträger 1 in einer Stellung, in der er sich ein wenig zusammengesteckt über einem Holm befindet. Die vorderen Enden 16 der Leisten 6 sind auf den außen liegenden, divergierenden Seiten 14 ein wenig konisch abgeschrägt, um den Einschub in den Durchbruch 7 zu erleichtern. Ein Pfeil 17 zeigt, wie die Klemmwange 3 ein wenig in den Durchbruch 7 eingesteckt als Klemmträger 1 auf den Holm 10 aufgesetzt wird.

Fig. 3 zeigt die mit der sichtbaren Nase 8 auf die Oberseite 9 des Holmes 10 aufgesetzte Klemmwange 2. Die vorderen Enden 16 ragen schon, wie in Fig. 2, durch den Durchbruch 7 hindurch. Ein Pfeil 18 deutet die weitere Einsteckrichtung an. Pfeile 19 zeigen, wie die vorderen Enden 16 ggf. zusammengedrückt werden, um das Zusammenschieben zu erleichtern. In erster Linie dient das Zusammendrücken der vorderen Enden 16 aber dem Erleichtern des Auseinanderschiebens der Klemmwangen 2,3 um einen festgesetzten Klemmträger wieder freizugeben.

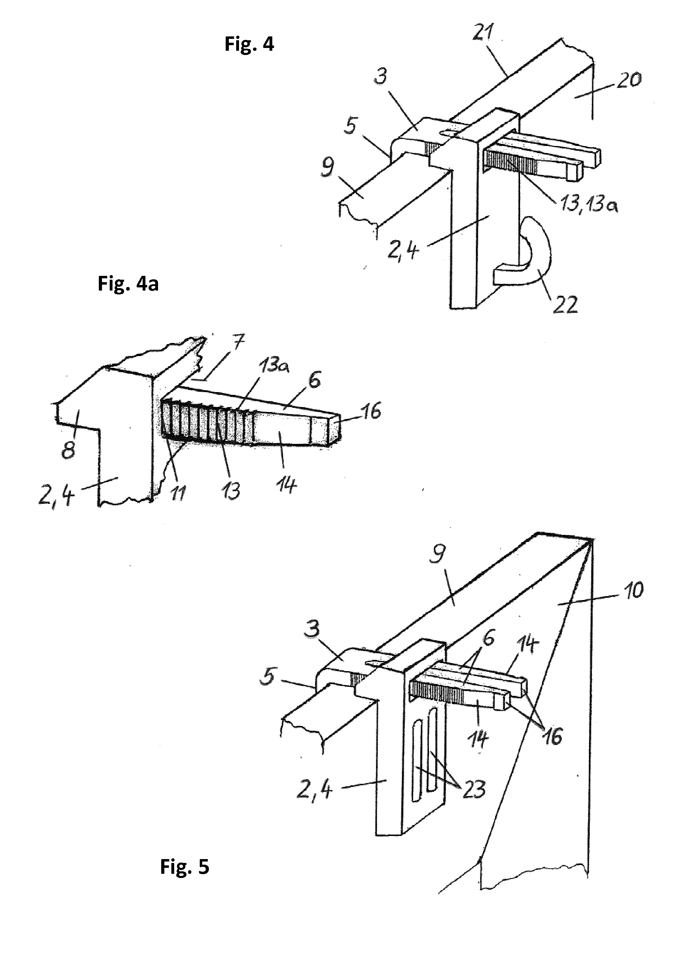

In Fig. 4 ist der Klemmbügel 3 vollständig eingeschoben. Die Montageplatte 4 der Klemmwange 2 liegt an der Vorderseite 20 des Holmes 10 an. Die Andruckplatte 5 liegt an der Hinterseite 21 des Holmes 10 an. Der Klemmträger 1 sitzt auf dem Holm 10 fest.

Beim Zusammenschieben der Klemmwangen 2, 3 sind die Zahnleisten 13 der Leisten 6 an den Ratschzähnen 12 des Durchbruches 7 vorbeigeratscht. Die Ratschzähne 12 rutschen beim Schieben von Zahnlücke 13a zu Zahnlücke 13a zwischen den Zähnen der Zahnleisten 13 vorbei. An den Stellen, an der die Montageplatte 4 und die Andruckplatte 5 fest an den Holmseiten 20, 21 anliegen, sind die Ratschzähne 12 in passende Lücken 13a zwischen den Zähnen der Zahnleisten 13 eingefallen und halten die Leisten 6 in der Klemmstellung fest. Die Andruckplatte 5 ist gegenüber den Leisten 6 so eingestellt, dass diese Teile 5, 6 einen Winkel α von weniger als 90°, vorliegend 85° miteinander einschließen. Damit wird der feste Sitz deutlich erhöht. Ein zwischen die Leisten eingesetzter Spreizkeil kann in Sonderfällen eine weitere Sitzstabilität herbeiführen (nicht gezeigt).

In Fig. 4a ist ein Ausschnitt aus Fig. 4 dargestellt, der nur einen Teil der Montageplatte 4 mit einem aufgebrochenen Durchbruch 7 darstellt, durch den eine Leiste 6 hindurch gesteckt ist. Man erkennt deutliche die Zähne der Zahnleiste 13 und die Zahnlücken 13a.

In den Fig. 1 bis 4 ist an der Montageplatte 4 ein Haken 22 zum Anhängen von Zubehör vorgesehen. Dies gilt aber nur beispielhaft. Eine andere Ausbildung der Montageplatte 4 zeigt Fig. 5. In dieser Figur ist die Montageplatte 4 mit Längsschlitzen 23 versehen, an denen Zubehör, z.B. mittel Schrauben und Muttern, angebracht werden kann.

Die Nasen 8 der Montageplatte 4 nehmen das ganze Gewicht des angehängten Zubehörs auf. Die Konstruktion des Klemmträgers 1 wird durch das angehängte Zubehör nicht belastet.

In den Figuren ist nur ein Klemmträger 1 mit zwei Leisten 6 dargestellt, dies gilt aber auch nur beispielhaft. Je nach dem Einsatzzweck ist es ebenso gut möglich, den Klemmträger 1 mit zwei Leisten mit aber nur einer Zahnleiste 13 (die andere Leiste ist durch eine Durchbrechung im Wesentlichen ohne Spiel geführt) oder mehreren, beispielsweise drei oder vier Zahnleisten 13 einzusetzen. Auch ist es möglich jede Zahnleiste durch einen separaten Durchbruch zu führen.

### Bezugszeichenliste:

- 1: Klemmträger
- 2: Klemmwange mit der Nase und der Montageplatte
- 3: Klemmwange mit der den Leisten
- 4: Montageplatte
- 5: Andruckplatte
- 6: Leiste
- 7: Durchbruch
- 8: Nase
- 9: Oberseite des Holmes
- 10: Holm
- 11: gegenüber befindliche Wände des Durchbruches
- 12: Ratschzähne am Durchbruch 7
- 13: Zahnleiste
- 13a: Lücken zwischen den Zähnen 13
- 14: Seiten der Leisten, voneinander divergierend
- 15: Rippe an der Andruckplatte
- 16: Vordere Enden der Leisten
- 17: Montagepfeil
- 18: Pfeil in Einsteckrichtung
- 19: Pfeile in Zusammendrückrichtung
- 20: Vorderseite des Holms
- 21: Hinterseite des Holms
- 22: Anhängehaken
- 23: Montageschlitze
- α: Winkel zwischen Andruckplatte und Leisten

## Patentansprüche

1. Klemmträger (1) zum Aufhängen von Zubehör, wie beispielsweise Sonnen- oder Blickschutzeinrichtungen oder dergleichen, an Holmen (10) von Fenstern oder Türen, mit gegeneinander verschieblich geführten Klemmwangen (2, 3), die montiert gegen die Vorderseite (20) und Rückseite (21) eines Holms (10) drücken um den Klemmträger (1) festzulegen, wobei eine Klemmwange (2) wenigstens einen Durchbruch (7) mit einer oder mehreren Anordnungen von Ratschzähnen (12) oder mehrere Durchbrüche (7) mit jeweils zumindest einem Ratschzahn (12) und die andere Klemmwange (3) zumindest zwei in dem/den Durchbruch / Durchbrüchen (7) verschiebbare, federnd ausgebildete und unter Spannung auf Abstand geführte Leisten (6) mit zumindest einer Zahnleiste (13) aufweist, wobei der jeweilige Ratschzahn (12), wenn die Leisten (6) zum Einklemmen des Holms (10) zwischen den Klemmwangen (2, 3) in den Durchbruch / die Durchbrüche (7) eingefahren sind, in eine passende Zahnlücke (13a) der Zahnleiste (13) so federnd unter Spannung eingefallen ist, dass der jeweilige Ratschzahn (12) die Leiste (6) verrastet.

2. Klemmträger nach Anspruch 1, **dadurch gekennzeichnet, dass** ein Durchbruch (7) in der Montageplatte (4) der Klemmwange (2) an gegenüber befindlichen Wänden (11) eines Durchbruchs (7) jeweils zumindest einen Ratschzahn (12) aufweist und dass die Klemmwange (3) mit (A) zwei auseinander federnd ausgebildeten und unter Spannung auf Abstand geführten Leisten (6) in dem Durchbruch (7) so verschiebbar ist, dass die Ratschzähne (12) am Durchbruch (7) in die passenden jeweils in Zahnlücken (13a) der jeweils außen geführten Zahnleisten (14) unter Spannung einfallen, insbesondere dann, wenn sich der Abstand der Zahnleisten (13) verkleinert, weil deren durch den Durchbruch (7) geführte Enden (16) nicht mehr zusammengepresst werden.

3. Klemmträger nach zumindest einem vorhergehenden Ansprüche, **dadurch gekennzeichnet, dass** der oder die Durchbrüche (7) in der Montageplatte (4) angeordnet ist/sind.

4. Klemmträger nach zumindest einem vorhergehenden Ansprüche, **dadurch gekennzeichnet, dass** der Winkel zwischen der Andruckplatte (5) der Klemmwange (3) und den Leisten (6) kleiner als 90°, vorzugsweise auf 88 bis 80°, beträgt.

5. Klemmträger nach Anspruch 1, **dadurch gekennzeichnet, dass** zwei Durchbrüche (7) in der Klemmwange (2) vorgesehen sind und an jeweils einer Wand (11) eines Durchbruchs (7) jeweils zumindest ein Ratschzahn (12) vorgesehen ist und dass die Klemmwange (3) mit zwei unter Spannung auseinanderfedernd (A) oder zwei unter Spannung zusammenfedernd (B) auf Abstand geführten Leisten (6) in den Durchbrüchen (7) so verschiebbar ist, dass die Ratschzähne (12) am Durchbruch (7) in die passenden Zahnlücken (13a) der jeweils außen (A) oder innen (B) geführten Zahnleisten (13) einfallen, wobei die Ratschzähne (12) bei zwei unter Spannung auseinanderfedernden Leisten (6) (A) an zwei äußeren Wänden des jeweiligen Durchbruchs und bei zwei unter Spannung zusammenfedernden Zahnleisten (14) (B) an zwei inneren Wänden des jeweiligen Durchbruchs vorgesehen sind.

6. Klemmträger nach zumindest einem vorhergehenden Ansprüche, **dadurch gekennzeichnet, dass** die Montageplatte (4) mit zumindest einer Nase (8) versehen ist, die sich auf die Holmoberseite (9) auflegt und sich auf dieser abstützt.

7. Klemmträger nach zumindest einem vorhergehenden Ansprüche, **dadurch gekennzeichnet, dass** bei Leisten (6) mit voneinander weg zeigenden Zahnleisten (13) ein einsetz- und herausnehmbarer Spreizkeil in der Raststellung die Leisten auseinander drückt und zusätzlich fixiert.

8. Klemmträger nach zumindest einem vorhergehenden Ansprüche, **dadurch gekennzeichnet, dass** die Montageplatte (4) mit zumindest einem Aufhänghaken (22) versehen ist.

9. Klemmträger nach zumindest einem vorhergehenden Ansprüche, **dadurch gekennzeichnet, dass** der oder die Durchbrüche (7) so viel Spiel haben, dass die die Leisten (6) an ihren durch den oder die Durchbrüche (7) geschobenen und aus dem Durchbruch / den Durchbrüchen (7) herausragenden Enden (16) im montierten Zustand der Klemmträger (1) gegen die Spannung der Leisten (6) mit der Hand zusammen (19) (A) oder auseinander (B) drückbar sind, insbesondere um die Leisten in den Durchbruch / die Durchbrüche (7) einzuführen und/oder herauszuführen.

10. Klemmträger nach einem oder mehreren der Ansprüche 1 bis 7, **dadurch gekennzeichnet, dass** die Montageplatte (4) mit Montageschlitzen (23) zum Anbringen von Zubehör versehen ist.

11. Klemmträger nach zumindest einem vorhergehenden Ansprüche, **dadurch gekennzeichnet**, die Andruckplatte (5) der Klemmwange (3) mit einer vorstehenden Rippe (15) versehen ist zum Eingreifen in eine Gummidichtung an der Holminnenseite.

12. Klemmträger nach zumindest einem vorhergehenden Ansprüche, **dadurch gekennzeichnet**, die die vorderen Enden (16) der Leisten (6) jeweils auf den au-βen liegenden Seiten (14) ein wenig konisch abgeschrägt sind, um den Einschub in den Durchbruch (7) zu erleichtern.

13. Fenster oder Fensterabdeckung mit dem Klemmträger nach zumindest einem vorhergehenden Ansprüche.

14. Fenster mit dem Klemmträger nach zumindest einem der Ansprüche 1 bis 12, wobei mehrere Klemmträger eine Fensterabdeckung tragen.
